# EUROPÄISCHE PATENTSCHRIFT

(11) **EP 3 490 756 B1**
(45) Veröffentlichungstag und Bekanntmachung des Hinweises auf die Patenterteilung: **19.01.2022**
(21) Anmeldenummer: 17745706.6
(22) Anmeldetag: 25.07.2017
(51) Int. Cl.: B25J 9/00, B65B 35/36

(54) **VERFAHREN ZUM VERPACKEN UND BEARBEITEN VON LEBENSMITTELPRODUKTEN**
METHOD FOR PACKAGING AND PROCESSING FOOD PRODUCTS
PROCÉDÉ D'EMBALLAGE ET DE TRAITEMENT DE PRODUITS ALIMENTAIRES

(30) Priorität: 29.07.2016 DE 102016114091
(43) Veröffentlichungstag der Anmeldung: 05.06.2019
(73) Patentinhaber: Weber Maschinenbau GmbH Breidenbach, 35236 Breidenbach (DE)
(72) Erfinder: DUNKEL, Michael, 33824 Werther (DE)
(74) Vertreter: Ter Meer Steinmeister & Partner
(86) Internationale Anmeldenummer: PCT/EP2017/068719
(87) Internationale Veröffentlichungsnummer: WO 2018/019810

(56) Entgegenhaltungen:
- EP-A1- 2 233 400
- DE-A1-102007 017 035
- DE-A1-102007 028 680
- JP-B2- 3 844 546
- US-A1- 2012 163 953

## Beschreibung

Die Erfindung betrifft ein Verfahren zum Verpacken und Bearbeiten von Lebensmittelprodukten oder Medizinprodukten in einer kontinuierlich arbeitenden Produktionslinie, bei dem einzelne Verpackungsbehälter in einer Befüllstation mit Produkten befüllt werden, die befüllten Verpackungsbehälter durch eine Ausgabestation in mehreren Spuren an eine Vereinzelungsvorrichtung ausgegeben werden, die die Verpackungsbehälter auf eine einzelne Spur eines Förderers umsetzt, und die Verpackungsbehälter durch den Förderer nacheinander zu mindestens einer weiteren Bearbeitungsstation der an Produktionslinie transportiert werden.

Aus EP 2 233 400 A1 ist ein Verfahren zum Verpacken und Bearbeiten von Lebensmittelprodukten oder Medizinprodukten in einer kontinuierlich arbeitenden Produktionslinie bekannt, bei dem einzelne Produkte auf eine einzelne Spur eines Förderers umgesetzt werden, und die Produkte durch den Förderer nacheinander zu mindestens einer weiteren Bearbeitungsstation an der Produktionslinie transportiert werden, wobei die Vereinzelungsvorrichtung situationsabhängig in einer von drei Betriebsarten betrieben wird:
a) einer Normalbetriebsart, in der die Produkte von einer Ausgabestation auf die einzelne Spur des Förderers umgesetzt werden,
b) einer Vorratsbetriebsart, in der die Produkte von der Ausgabestation in eine Zwischenablage umgesetzt werden, und
c) einer Niedriglastbetriebsart, in der die Produkte aus der Zwischenablage auf die einzelne Spur des Förderers umgesetzt werden.

Verpackungsbehälter für Lebensmittelprodukte, beispielsweise Tiefziehbehälter aus Kunststoff, werden häufig in einer Form hergestellt und bereitgestellt, in der mehrere Nutzen, d.h., mehrere miteinander zusammenhängende Einzelbehälter, in mehreren Spuren und Reihen in einer rechteckigen Matrix angeordnet sind. Die Befüllstation arbeitet deshalb zweckmäßigerweise so, dass auch die Produkte in mehreren Spuren zugeführt werden, so dass mehrere zu derselben Reihe gehörende Verpackungsbehälter parallel und gleichzeitig befüllt werden können. Nachdem die Verpackungsbehälter geschlossen und voneinander getrennt worden, ist es für die weitere Bearbeitung bis zum Versand, also beispielsweise für das Etikettieren, Sortieren, Kommissionieren und/oder Verpacken zu größeren Versandgebinden zweckmäßig, wenn die einzelnen Verpackungsbehälter nacheinander auf einem einspurigen Förderer transportiert werden, an dem die betreffenden Bearbeitungsstationen angeordnet sind. Das hat den Vorteil, dass Ausrüstungen wie Etikettierer und dergleichen zur Ausführung der Bearbeitungsschritte nur einfach vorhanden zu sein brauchen.

Üblicherweise enthält die Produktionslinie deshalb eine Vereinzelungsvorrichtung, beispielsweise in der Form eines Gelenkarmroboters, der die Schnittstelle zwischen einem mehrspurigen stromaufwärtigen Ast der Produktionslinie und einem einspurigen stromabwärtigen Ast bildet. Bei einem kontinuierlichen Betrieb der Produktionslinie sollten die Produktdurchsätze im mehrspurigen und im einspurigen Ast möglichst gut aneinander angepasst sein.

Aufgabe der Erfindung ist es, eine verbesserte Auslastung der Produktionslinie , insbesondere auch im Fall von Betriebsunterbrechungen oder Verzögerungen an einer der Bearbeitungsstationen, und zugleich eine effiziente Behandlung schadhafter Verpackungsbehälter zu ermöglichen.

Diese Aufgabe wird erfindungsgemäß mit den in den unabhängigen Ansprüchen 1, 6 und 7 angegebenen Merkmalen gelöst.

Mit zunehmender Anzahl der Bearbeitungsstationen, die in eine gemeinsame Produktionslinie integriert sind, steigt die Wahrscheinlichkeit von Betriebsstörungen, die zu Verzögerungen oder Betriebsunterbrechungen an einer der Bearbeitungsstationen führen. Bisher hatte das zur Folge, dass die gesamte Produktionslinie - von der Bereitstellung der Lebensmittelprodukte und der Bereitstellung bzw. Herstellung der Verpackungsbehälter bis zur Versandabwicklung - langsamer arbeiten oder vorübergehend ganz stillgesetzt werden musste. Bei dem erfindungsgemäßen Verfahren wird nun die Fähigkeit der Vereinzelungsvorrichtung, die Verpackungsbehälter zu handhaben und nach einem flexibel konfigurierbaren Schema von einer Anordnung in eine andere umzusetzen, dazu genutzt, eine Pufferstation in der Produktionslinie zu schaffen und Produkte vorübergehend in einer Zwischenablage zwischenzuspeichern.

Wenn die Produktionsgeschwindigkeit im stromaufwärtigen, mehrspurigen Ast der Produktionslinie größer ist als im stromabwärtigen, einspurigen Ast, kann die Vereinzelungsvorrichtung auf Vorrat arbeiten und in der Zwischenablage einen Vorrat an befüllten Verpackungsbehältern anlegen. Wenn es dagegen zu einer Verzögerung oder Betriebsunterbrechung im stromaufwärtigen Ast der Produktionslinie kommt, so kann der stromabwärtige Ast der Produktionslinie weiterhin voll ausgelastet werden, indem Verpackungsbehälter aus der Zwischenablage in den Produktionsablauf eingespeist werden.

Das Verfahren ist auch bei Produktionslinien anwendbar, die auch im stromabwärtigen Ast noch zwei oder mehr parallele Spuren aufweisen.

Außer für Lebensmittelprodukte ist das Verfahren auch zum Verpacken, insbesondere zum sterilen Verpacken von Medizinprodukten wie Medikamenten oder Injektionsspritzen anwendbar.

Vorteilhafte Ausgestaltungen und Weiterbildungen der Erfindung sind in den Unteransprüchen angegeben.

Gegenstand der Erfindung ist außerdem eine Vorrichtung zur Durchführung des oben beschriebenen Verfahrens.

Die Zwischenablage kann die Form eines Regals mit mehreren übereinander angeordneten Fachböden haben, auf denen die Verpackungsbehälter mit Hilfe eines die Vereinzelunsgvorrichtung bildenden Roboters abgelegt werden können. Auf diese Weise wird eine hohe Zwischenspeicherkapazität im Arbeitsbereich des Roboters ermöglicht. Die Lagerdichte in der Zwischenablage lässt sich dadurch weiter steigern, dass die Fachböden des Regals als ausziehbare Böden gestaltet werden, die in geringem Abstand übereinander angeordnet sind. Der Zugang des Roboter zu einem einzelnen Fachboden wird dann dadurch ermöglicht, dass dieser Boden ausgezogen wird.

In einer vorteilhaften Ausführungsform wird die Zwischenablage durch mehrere an die Vereinzelungsvorrichtung andockbare Wagen gebildet, die bei Bedarf auch in ein weiter von der Produktionslinie entferntes Lager gefahren werden können. Auf diese Weise lässt sich die Zwischenspeicherkapazität erheblich vergrößern. Natürlich können diese Wagen ihrerseits als Regale mit schubladenartig ausziehbaren Fachböden gestaltet sein.

In einer vorteilhaften Ausführungsform ist die Vereinzelungsvorrichtung mit einer Prüfstation kombiniert, in der die befüllten Verpackungsbehälter mittels elektronischer Bildverarbeitung und/oder sonstiger Sensorik auf etwaige Mängel geprüft werden. Mangelhafte Verpackungsbehälter können dann automatisch aussortiert werden, indem sie mit Hilfe der Vereinzelungsvorrichtung in die Zwischenablage umgesetzt werden.

In einer besonders vorteilhaften Ausführungsform ist für die Vereinzelungsvorrichtung eine elektronische Steuereinrichtung vorgesehen, die mit einem elektronischen Produktmanagementsystem kombiniert oder vernetzt ist. Dadurch ist es möglich, die Historie jedes einzelnen Verpackungsbehälters während des gesamten Produktionsprozesses zu verfolgen, ggf. einschließlich solcher Phasen, in denen sich der betreffende Verpackungsbehälter in der Zwischenablage befindet.

Im folgenden werden Ausführungsbeispiele anhand der Zeichnung näher erläutert.

Es zeigen:
- Fig. 1: einen schematischen Grundriss einer Produktionslinie, die für die Durchführung des erfindungsgemäßen Verfahrens ausgebildet ist;
- Fig. 2: eine vergrößerte Grundrissdarstellung von Teilen der Produktionslinie nach Fig. 2;
- Fig. 3: eine Frontansicht einer Vereinzelungsvorrichtung und einer Zwischenablage an der Produktionslinie aus Richtung der Pfeile III-III in Fig. 2;
- Fig. 4 und 5: vereinfachte Frontansichten analog zu Fig. 3, für unterschiedliche Betriebszustände der Vereinzelungsvorrichtung;
- Fig. 6: ein Beispiel eines Datensatzes in einem elektronischen Produktionsmanagementsystem, das mit einer elektronischen Steuereinrichtung der Vereinzelungsvorrichtung vernetzt oder in diese integriert ist; und
- Fig. 7: eine Zwischenablage, die von zwei Produktionslinien gemeinsam genutzt wird.

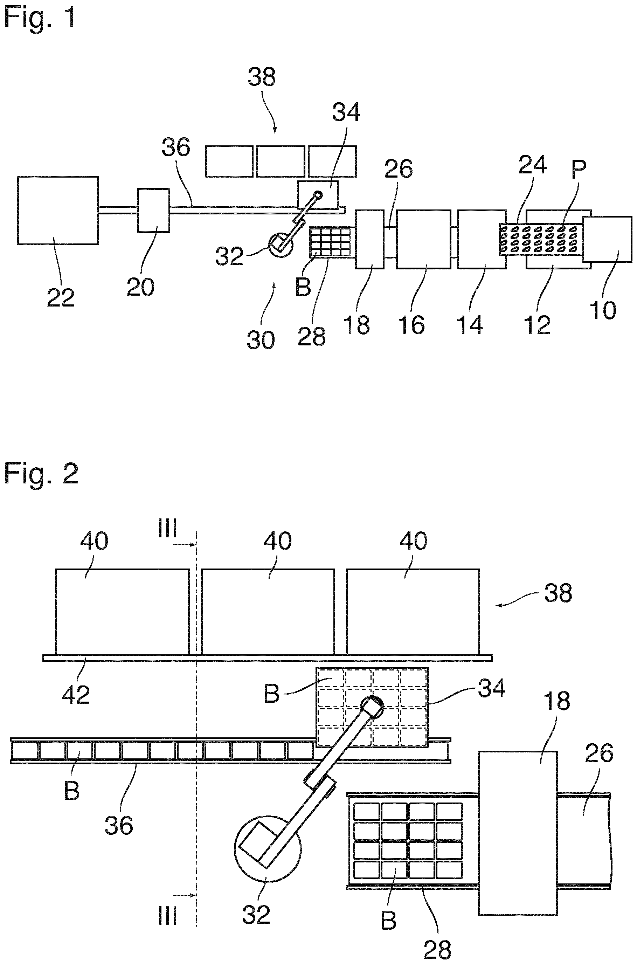

In Fig. 1 ist schematisch eine Produktionslinie gezeigt, die beispielsweise zum Portionieren und Verpacken von Fleischprodukten P und zur weiteren Bearbeitung bis hin zur Versandabfertigung dient. Die Vorrichtung umfasst, von rechts nach links in Fig. 1, einen Portionierer 10 zum Portionieren der Fleischprodukte, eine Tiefziehmaschine 12 zum Herstellen von Verpackungsbehältern B für die Fleischprodukte, eine Befüllstation 14, in der die Fleischprodukte in die einzelnen Verpackungsbehälter eingelegt werden, eine Siegelstation 16 zum Verschließen der Verpackungsbehälter mit einer aufgeschweißten Folie und zum Aufteilen der noch miteinander zusammenhängenden Verpackungsbehälter in Einzelbehälter, eine Prüfstation 18 für eine Qualitätsprüfung der Verpackungsbehälter und Produkte, eine Etikettierstation 20 mit einem integriertem Etikettendrucker zum Etikettieren der Verpackungsbehälter, und schließlich eine Versandstation 22, in der die Verpackungsbehälter paketiert und versandfertig gemacht werden.

Ein Mehrspurförderer 24 dient dazu, die vom Portionierer 10 portionierten Fleischprodukte P in mehreren (vier) parallelen Spuren zu der Befüllstation 14 zu transportieren. Die Tiefziehstation 12 ist unterhalb des Mehrspurförderers 24 angeordnet und erzeugt in jedem Arbeitstakt eine 4 × 4 Matrix miteinander zusammenhängender, oben offener Verpackungsbehälter, die zu der Befüllstation 14 überführt werden, wo dann die Fleischprodukte P in die einzelnen Verpackungsbehälter eingelegt werden. Nachdem die Verpackungsbehälter in der Siegelstation 16 verschlossen und voneinander getrennt wurden, werden sie von einem Ausgabeförderer 26 - immer noch in vier parallelen Spuren - zu der Prüfstation 18 und schließlich zu einer Ausgabestation 28 transportiert.

Die Ausgabestation 28 wird durch einen Endabschnitt des Ausgabeförderers 26 gebildet, der synchron mit dem Arbeitstakt der Tiefziehmaschine 12 intermittierend angetrieben wird. An der Ausgabestation 28 ist eine Vereinzelungsvorrichtung 30 angeordnet, die durch einen Gelenkarmroboter 32 und ein an dem Roboterarm gehaltenes Greiforgan 34 gebildet wird. In der Ausgabestation 28 liegen sechzehn Verpackungsbehälter B in vier Spuren und vier Reihen, entsprechend der Matrix der in der Tiefziehmaschine 12 hergestellten leeren Behälter, auf dem Ausgabeförderer 26. Mit Hilfe des Greifers 34 können diese sechzehn Verpackungsbehälter B gemeinsam angehoben und auf einen einspurigen Förderer 36 umgesetzt werden, auf dem die Verpackungsbehälter dann zur Etikettierstation 20 und zur Versandstation 22 weitertransportiert werden.

Der Greifer 34 ist so ausgebildet, dass er die Verpackungsbehälter B, nachdem er sie gemeinsam von der Ausgabestation 28 abgenommen hat, einzeln auf den Förderer 36 fallenlassen kann. Um alle sechzehn Verpackungsbehälter an den Förderer 36 zu übergeben, wird der Greifer 34 mit Hilfe des Roboters 32 zunächst so ausgerichtet, dass sich eine Spur aus vier Verpackungsbehältern über dem Förderer 36 befindet. Diese vier Behälter werden dann fallengelassen. Danach wird der Greifer 34 um eine Spur zur Seite bewegt, so dass, nachdem der Förderer 36 sich um vier Positionen weiterbewegt hat, die nächste Spur mit vier Verpackungsbehältern fallengelassen werden kann, usw.. Nachdem die letzte der vier Spuren an den Förderer 36 übergeben wurde, kehrt der Greifer 34 in eine Position über der Ausgabestation 28 zurück, so dass er die nächste Matrix aus sechzehn Verpackungsbehältern B übernehmen kann, sobald diese eingetroffen ist.

Innerhalb des Arbeitsbereiches des Roboters 32 ist neben dem Förderer 36 eine Zwischenablage 38 angeordnet, auf der Verpackungsbehälter mit Hilfe des Greifers 34 einzeln oder gruppenweise abgelegt werden können.

Wie deutlicher in Fig. 2 zu erkennen ist, wird die Zwischenablage 38 durch drei Wagen 40 gebildet, die in vorbestimmten Positionen relativ zu dem Roboter 32 an eine ortsfeste Andockschiene 42 angedockt sind, jedoch einzeln und unabhängig voneinander von der Andockschiene gelöst und zu anderen Orten gefahren werden können. Durch das Andocken der Wagen 40 an der Andockschiene 42 wird sichergestellt, dass die Koordinaten der Ablagepositionen für die Verpackungsbehälter B in den Wagen 40 präzise definiert sind, so dass diese Ablagepositionen von dem Roboter 32 gezielt angefahren werden können.

In Fig. 2 sind weitere Verpackungsbehälter B gezeigt, die in einer einzelnen Spur auf dem Förderer 36 abtransportiert werden. Gestrichelt eingezeichnet sind außerdem weitere Verpackungsbehälter B, die an der Unterseite des Greifers 34 gehalten sind.

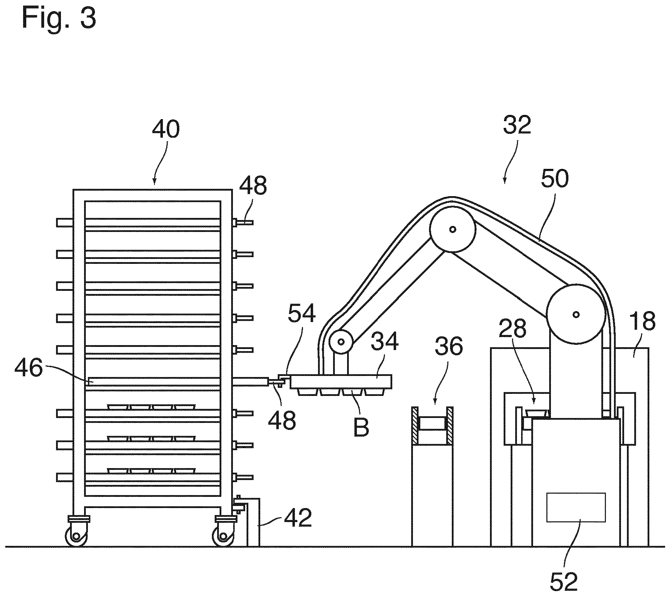

In Fig. 3 ist einer der an die Andockschiene 42 angedockten Wagen 40 detaillierter dargestellt. Jeder dieser Wagen weist eine Vielzahl ausziehbarer Fachböden 46 auf, die in mehreren Etagen übereinander angeordnet sind und jeweils an der Vorderseite einen Griff 48 haben.

Der Greifer 34 an dem Arm des Roboters 32 ist im gezeigten Beispiel als Sauggreifer ausgebildet und weist an der Unterseite für jede der sechzehn Aufnahmepositionen für die Verpackungsbehälter B einen einzeln an- und abschaltbaren Saugkopf auf, so dass die Verpackungsbehälter einzeln angehoben und fallengelassen werden können. Ein Unterdruckschlauch 50 verbindet die Saugköpfe des Greifers 34 mit einer nicht näher gezeigten Unterdruckquelle in der Basis des Roboters 32. In der Basis des Roboters 32 ist außerdem eine elektronische Steuereinrichtung 52 angedeutet, die die Bewegungen des Roboterarmes sowie die Aktivierung der Saugköpfe des Greifers 34 steuert.

Im gezeigten Beispiel weist der Greifer 34 eine Klaue 54 auf, mit welcher der Greifer 34 in die Griffe 48 der Fachböden 46 eingreifen kann, so dass die Fachböden mit Hilfe des Roboters ausgezogen werden können.

In der in Fig. 3 als Beispiel dargestellten Situation sind in den drei untersten Etagen des Wagens 40 bereits Verpackungsbehälter abgelegt worden. Der nächsthöhere Fachboden wird gerade von der Klaue 54 des Greifers 34 erfasst und ausgezogen.

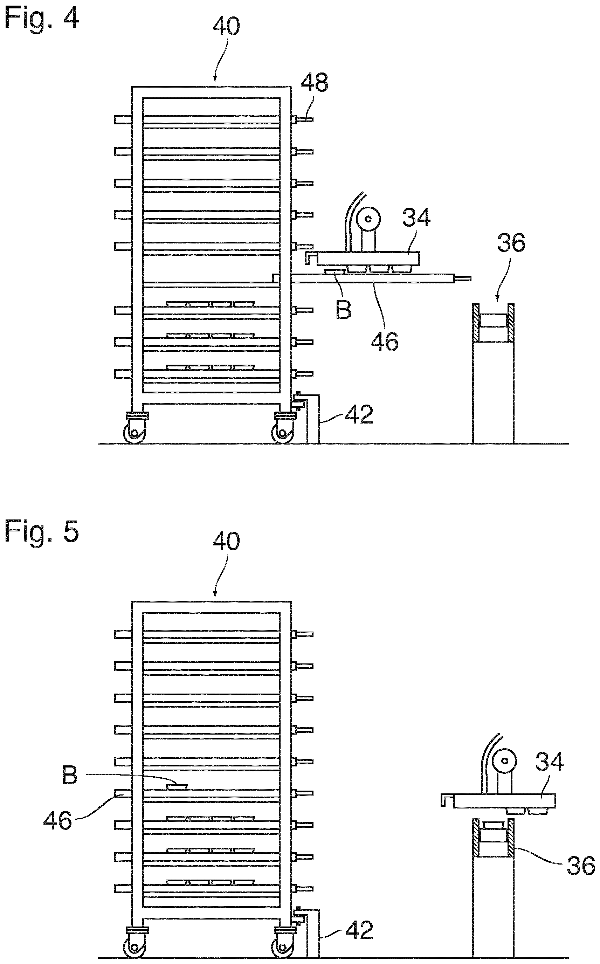

Fig. 4 zeigt ein etwas späteres Stadium des Verfahrensablaufs. In diesem Stadium ist der Auszug 46 ganz ausgezogen, und der Greifer 34 hat gerade einen der Verpackungsbehälter B (oder mehrere in derselben Spur liegende Verpackungsbehälter) auf den ausgezogenen Fachboden 46 fallengelassen.

Fig. 5 illustriert ein noch etwas späteres Stadium, in dem der Fachboden 46, auf dem der Verpackungsbehälter B abgelegt wurde, mit Hilfe des Greifers 34 wieder in den Wagen 40 eingeschoben wurde. Der Greifer 34 ist über den Förderer 36 bewegt worden und setzt gerade die an dem Greifer verbliebenen Verpackungsbehälter auf dem Förderer 36 ab.

Auf entsprechende Weise können mit Hilfe des Greifers 34 auch ausgewählte Verpackungsbehälter aus dem Wagen 40 entnommen und auf dem Förderer 36 abgesetzt werden.

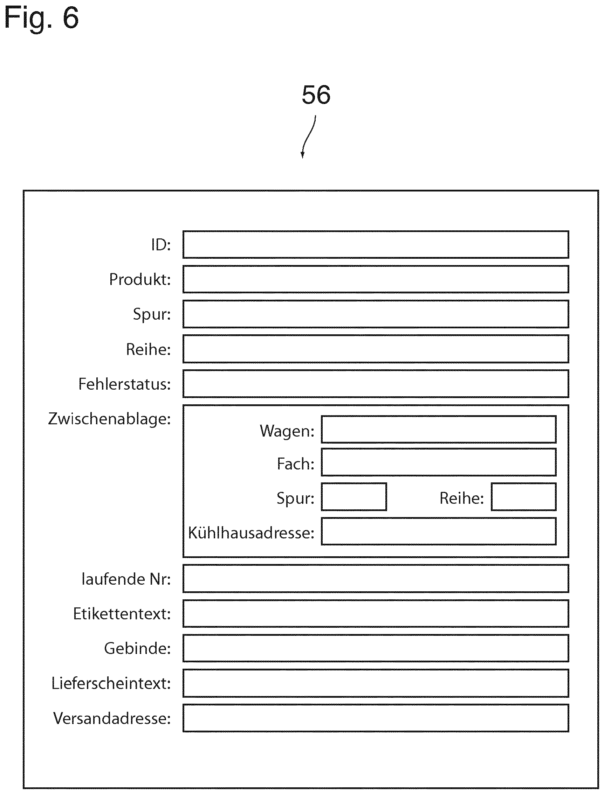

Die Steuereinrichtung 52 des Roboters 32 ist Teil eines Rechnersystems oder Netzwerkes, in dem eine Produktionsmanagementsoftware implementiert ist, die dazu dient, sämtliche Arbeitsabläufe an der Produktionslinie zu steuern. In diesem Rechnersystem ist auch eine Datenbank gespeichert, in der für jedes Produkt, das vom Portionierer 10 auf den Mehrspurförderer 24 aufgegeben wird, ein Datensatz 56 mit der in Fig. 6 gezeigten Datenstruktur angelegt wird.

Ein Feld "ID" enthält eine Kennung, die das betreffende Produkt oder - genauer - den zugehörigen Verpackungsbehälter eindeutig identifiziert. Ein Feld "Produkt" enthält Angaben über die Art und Eigenschaften des Produkts (beispielsweise Kotelett oder Schinken) und ggf. die Herkunft des Produkts (Schlachtbetrieb und/oder Züchter). In einem Feld "Spur" wird eine Zahl von 1 bis 4 eingetragen, die die Spur angibt, in der sich das Produkt auf dem Mehrspurförderer 24 und dann später auf dem Ausgabeförderer 26 befindet. Entsprechend gibt ein Feld "Reihe" die Reihe (quer zur Förderrichtung) an, in der sich das Produkt befindet. Die Reihen der auf den Mehrspurförderer 24 aufgelegten Produkte werden vom Produktionsbeginn an fortlaufend gezählt.

Wenn in der Prüfstation 18 irgendein Mangel an einen der Verpackungsbehälter oder dem darin enthaltenen Produkt festgestellt wird, so wird in dem zugehörigen Datensatz in einem Feld "Fehlerstatus" der Mangel näher charakterisiert. Wenn ein Fehler festgestellt wird, der es erforderlich macht, den betreffenden Verpackungsbehälter auszusortieren, so wird der Roboter 32 so angesteuert, dass der Produktbehälter nicht an den Förderer 36 übergeben, sondern stattdessen auf einem für "Ausschuss" reservierten Fachboden 46 eines der Wagen 40 abgesetzt wird.

Wenn der Fehlerstatus verlangt, dass das betreffende Produkt und der zugehörige Verpackungsbehälter näher überprüft werden, so wird der Verpackungsbehälter an anderer Stelle in der Zwischenablage 38 abgelegt, und in einem Feld "Zwischenablage" in dem Datensatz 56 wird der genaue Ablageort festgehalten. Dazu sind in dem Feld "Zwischenablage" Unterfelder "Wagen", "Fach", "Spur" und "Reihe" vorgesehen. Diese Felder identifizieren den Wagen 40 und den Fachboden 46 in bzw. auf dem sich der Ablageort befindet. Die Felder "Spur" und "Reihe" identifizieren den genauen Ablageort auf dem betreffenden Fachboden. Die Ablage erfolgt stets in dem 4 × 4 Raster, in dem auch die Saugköpfe des Greifers 34 angeordnet sind. Dementsprechend kann auch das Feld "Reihe" hier nur die Werte von 1 bis 4 annehmen.

Wenn die Überprüfung des Produkts erst zu einem späteren Zeitpunkt erfolgen soll, kann der Wagen 40, in dem das Produkt abgelegt wurde, auch von der Andockschiene 42 abgekoppelt und zu einem anderen Ort gefahren werden, beispielsweise in ein Kühlhaus. In dem Fall wird der Lagerort in einem Feld "Kühlhausadresse" festgehalten.

Nachdem der betreffende Wagen 40 wieder an einer freien Andockstelle an der Andockschiene 42 angedockt wurde, kann der zuvor in der Zwischenablage abgelegte Verpackungsbehälter automatisch wiedergefunden und wieder aufgenommen werden.

Wann immer mit dem Greifer 34 ein Verpackungsbehälter auf dem einspurigen Förderer 36 abgelegt wird, wird diesem Verpackungsbehälter eine laufende Nummer zugeordnet und in einem Feld "laufende Nr." in dem betreffenden Datensatz 56 festgehalten. Das geschieht unabhängig davon, ob der betreffende Verpackungsbehälter aus der Zwischenablage 38 oder von der Ausgabestation 28 übernommen wurde. Auch die laufenden Nummern werden vom Produktionsbeginn an fortlaufend gezählt. Diese fortlaufenden Nummern ermöglichen es, den betreffenden Verpackungsbehälter B auch in den nachfolgenden Bearbeitungsstationen, in diesem Beispiel also in der Etikettierstation 20 und der Versandstation 22 eindeutig zu identifizieren.

In einem weiteren Feld "Etikettentext" kann ein Text gespeichert werden, der in der Etikettierstation 20 auf ein Etikett aufgedruckt wird, das dann auf dem Verpackungsbehälter angebracht wird.

Ein Feld "Gebinde" identifiziert ein größeres Gebinde, beispielsweise einen Versandkarton, in dem der betreffende Verpackungsbehälter B zusammen mit anderen Verpackungsbehältern verpackt wird. In weiteren Feldern "Lieferscheintext" und "Versandadresse" kann außerdem für jedes Gebinde ein auf den Lieferschein zu druckender Text sowie eine Versandadresse gespeichert werden.

Die oben beschriebene Datenbank ermöglicht es, die Historie jedes einzelnen Verpackungsbehälters und des darin enthaltenen Produkts zu verfolgen, unabhängig davon, ob die Produkte von der Ausgabestation 28 direkt an den Förderer 36 übergeben werden oder ob sie eine Zeit lang in der Zwischenablage 38 oder an einem anderen Ort zwischengespeichert werden.

Die Produktionslinie kann beispielsweise so betrieben werden, dass bei Produktionsbeginn zunächst für eine gewisse Zeit "auf Vorrat" gearbeitet wird, d.h., dass die an der Ausgabestation 28 eintreffenden Verpackungsbehälter in der Zwischenablage 38 abgelegt werden. Wenn auf diese Weise in der Zwischenablage ein gewisser Vorrat an Produktbehältern angelegt wurde, wird auf "Normalbetrieb" umgeschaltet, und die dann an der Ausgabestation 28 eintreffenden Verpackungsbehälter werden direkt auf den Förderer 36 umgesetzt und zur Versandstation 22 weitergeleitet. Falls an irgendeiner Stelle stromaufwärts der Ausgabestation 28 eine Betriebsunterbrechung erfolgt oder eine Störung, durch die der Betrieb des mehrspurigen Astes der Produktionslinie verlangsamt wird (Niedriglastbetrieb), so werden die dadurch frei werdenden Plätze auf dem Förderer 36 mit Verpackungsbehältern aus der Zwischenablage 38 aufgefüllt, so dass die Etikettierstation 20 und die Versandstation 22 trotz der Betriebsstörung weiterhin voll ausgelastet bleiben.

Wenn umgekehrt eine Störung an irgendeiner Bearbeitungsstation an dem einspurigen Förderer 36 eintritt, so wird die Betriebsart des Roboters 32 abwechselnd zwischen Normalbetrieb und Vorratsbetrieb umgeschaltet, so dass die an der Ausgabestation 28 eintreffenden Verpackungsbehälter auf den Förderer 36 umgesetzt werden, sofern ausreichend Plätze auf diesem Förderer 36 frei sind, und wenn dort kein Platz frei ist, werden die Verpackungsbehälter stattdessen in der Zwischenablage 38 abgesetzt.

Wann immer wegen eines erkannten Fehlers oder aus irgendeinem anderen Grund einzelne Verpackungsbehälter oder auch ganze Chargen von Verpackungsbehältern aus der laufenden Produktion abgezweigt werden sollen, so lässt sich dies durch vorübergehendes Umschalten auf "Vorratsbetrieb" problemlos erreichen, und die dabei in dem Feld "Zwischenablage" vorgenommenen Einträge erlauben es, die benötigten Produkte jederzeit wiederzufinden und bei Bedarf wieder in den Produktionsprozess einzugliedern.

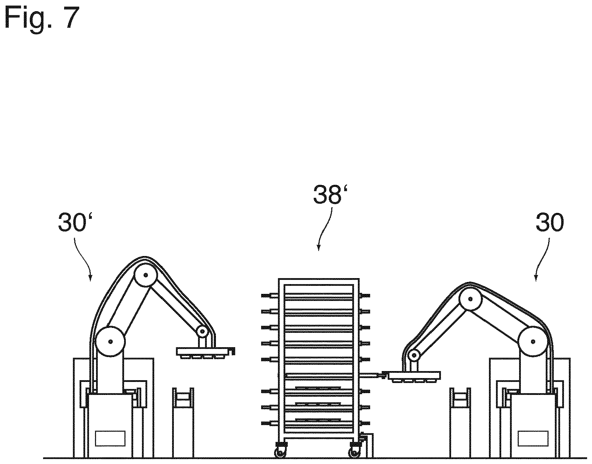

Fig. 7 illustriert ein Ausführungsbeispiel, bei dem zwei Produktionslinien, die jeweils eine Vereinzelungsvorrichtung 30 bzw. 30' enthalten, durch eine gemeinsame Zwischenablage 38' miteinander verknüpft sind. Die Zwischenablage kann in diesem Fall von beiden Seiten her von den Vereinzelungsvorrichtungen 30, 30' bedient werden. Dabei kann die Zwischenablage auf die gleiche Weise benutzt werden wie bei den zuvor beschriebenen Ausführungsbeispielen. Zusätzlich besteht die Möglichkeit, Produkte von einer Produktionslinie auf die andere zu übergeben und so Unterschiede in der Auslastung der Produktionslinien auszugleichen.

## Patentansprüche

1. Verfahren zum Verpacken und Bearbeiten von Lebensmittelprodukten oder Medizinprodukten in einer kontinuierlich arbeitenden Produktionslinie, bei dem einzelne Verpackungsbehälter (B) in einer Befüllstation (14) mit Produkten (P) befüllt werden, die befüllten Verpackungsbehälter (B) durch eine Ausgabestation (28) in mehreren Spuren an eine Vereinzelungsvorrichtung (30) ausgegeben werden, die die Verpackungsbehälter auf eine einzelne Spur eines Förderers (36) umsetzt, und die Verpackungsbehälter durch den Förderer (36) nacheinander zu mindestens einer weiteren Bearbeitungsstation (20, 22) an der Produktionslinie transportiert werden, wobei die Vereinzelungsvorrichtung situationsabhängig in einer von drei Betriebsarten betrieben wird:
a) einer Normalbetriebsart, in der die Verpackungsbehälter (B) von der Ausgabestation (28) auf die einzelne Spur des Förderers (36) umgesetzt werden,
b) einer Vorratsbetriebsart, in der die Verpackungsbehälter (B) von der Ausgabestation (28) in eine Zwischenablage (38) umgesetzt werden, und
c) einer Niedriglastbetriebsart, in der die Verpackungsbehälter (B) aus der Zwischenablage (38) auf die einzelne Spur des Förderers (36) umgesetzt werden,
wobei zumindest ein Teil (40) der Zwischenablage (38) vorübergehend von der Produktionslinie abgekoppelt und zu einem anderen Lagerort überführt wird
und wobei die Verpackungsbehälter (B) spätestens in der Vereinzelungsvorrichtung (30) einer Qualitätsprüfung unterzogen werden und Verpackungsbehälter, für die ein Mangel festgestellt wurde, mit Hilfe der Vereinzelungsvorrichtung (30) in die Zwischenablage (38) aussortiert werden, indem der Verpackungsbehälter nicht an den Förderer (36) übergeben, sondern stattdessen auf einem für Ausschuss reservierten Fachboden (46) in dem genannten Teil (40) der Zwischenablage abgesetzt wird.

2. Verfahren nach Anspruch 1, bei dem am Beginn eines Produktionslaufes zunächst für eine gewisse Zeit im Vorratsbetrieb gearbeitet wird, dann auf Normalbetrieb umgeschaltet wird, wenn ein gewisser Vorrat an Verpackungsbehältern (B) in der Zwischenablage (38) angelegt wurde, und dann im Fall einer Betriebsstörung in der Produktionslinie stromaufwärts der Ausgabestation (28) auf Niedriglastbetrieb umgeschaltet wird.

3. Verfahren nach Anspruch 1 oder 2, bei dem im Fall einer Betriebsstörung in der Produktionslinie stromabwärts der Vereinzelungsvorrichtung (30) auf Vorratsbetrieb umgeschaltet wird.

4. Verfahren nach einem der vorstehenden Ansprüche, bei dem zumindest in der Vorratsbetriebsart für jeden Verpackungsbehälter (B), der die Ausgabestation (28) erreicht, ein Datensatz (56) in einer Datenbank angelegt wird und in diesem Datensatz ein Ablageort des Verpackungsbehälters in der Zwischenablage (38) gespeichert wird.

5. Verfahren nach einem der vorstehenden Ansprüche, bei dem zwei Produktionslinien parallel betrieben werden und eine Zwischenablage (38') von Vereinzelungsvorrichtungen (30, 30') der beiden Produktionslinien gemeinsam genutzt wird.

6. Produktionslinie zum Verpacken und Bearbeiten von Lebensmittelprodukten oder Medizinprodukten, mit einer Befüllstation (14) zum Befüllen von Verpackungsbehältern (B) mit Produkten (P), einer Ausgabestation (28), die dazu ausgebildet ist, die in der Befüllstation (16) befüllten Verpackungsbehälter in mehreren Spuren parallel zu übernehmen, einer Vereinzelungsvorrichtung (30) zum Umsetzen der Verpackungsbehälter von der Ausgabestation (28) auf eine einzelne Spur eines Förderers (36), und mindestens einer an dem Förderer (36) angeordneten weiteren Bearbeitungsstation (20, 22), wobei der Vereinzelungsvorrichtung (30) eine Zwischenablage (38) zugeordnet ist und die Vereinzelungsvorrichtung dazu ausgebildet ist, Verpackungsbehälter aus der Ausgabestation (28) in die Zwischenablage umzusetzen und Verpackungsbehälter aus der Zwischenablage (38) auf den Förderer (36) umzusetzen, wobei zumindest ein Teil (40) der Zwischenablage (38) vorübergehend von der Produktionslinie abgekoppelbar und zu einem anderen Lagerort überführbar ist und wobei an oder stromaufwärts der Vereinzelungsvorrichtung eine Prüfstation (18) für eine Qualitätsprüfung der Verpackungsbehälter angeordnet ist und eine elektronische Steuereinrichtung (52)dazu programmiert ist, das Verfahren nach einem der Ansprüche 1 bis 5 auszuführen.

7. Softwareprodukt mit Programmcode, der auf einem nicht-temporären maschinenlesbaren Medium gespeichert ist und dazu konfiguriert ist, ein Steuerungsrechnersystem einer Produktionslinie nach Anspruch 6 zu veranlassen, das Verfahren nach einem der Ansprüche 1 bis 5 auszuführen.

## Claims

1. A method for packaging and processing food products or medical products in a continuously operating production line, wherein individual packaging containers (B) are filled with products (P) in a filling station (14); the filled packaging containers (B) are dispensed to an individualizing device (30) in multiple tracks by a dispensing station (28), said individualizing device transferring the packaging containers onto an single track of a conveyor (36); and the packaging containers are transported by the conveyor (36) one after the other to at least one additional processing station (20, 22) on the production line, wherein the individualizing device is operated in one of three operating modes, dependent upon the respective situation:
a) a normal mode in which the packaging containers (B) are transferred from the dispensing station (28) onto the single track of the conveyor (36),
b) an on-stock mode in which the packaging containers (B) are transferred from the dispensing station (28) to a temporary store (38), and
c) a low-load mode in which the packaging containers (B) are transferred from the temporary store (38) onto the single track of the conveyor (36),
wherein at least a part (40) of the temporary store (38) is temporarily uncoupled from the production line and moved to another storage location,
and wherein the packaging containers (B), at latest when they reach the individualizing device (30), are subjected to a quality test, and packaging containers for which a defect has been detected, are sorted-out into the temporary store (38) by means of the individualizing device (30) by not transferring the packaging container to the conveyor (36) but instead placing it onto a shelf (46) of the carriage (40) that has been reserved for rejects.

2. The method according to claim 1, wherein, at a start of a production run, the on-stock mode is initially used for a certain time, operation is then switched to the normal mode after a certain stock of packaging containers (B) has been built-up in the temporary store (38), and then, in case of a disruption of operation in the production line upstream of the dispensing station (28), operation is switched to the low-load mode.

3. The method according to claim 1 or 2, wherein, in case of a disruption in the production line downstream of the individualizing device (30), the operation is switched to the on-stock mode.

4. The method according to any of the preceding claims, wherein, at least in the on-stock mode, a data record (56) is created for each packaging container (B) that reaches the dispensing station (28), said data record storing a placement position of the packaging container in the temporary store (38).

5. The method according to any of the preceding claims, wherein two production lines are operated in parallel, and a temporary store (38') is used by individualizing devices (30, 30') of the two production lines in common.

6. A production line for packaging and processing food products or medical products, the production line comprising a filling station (14) for filling packaging containers (B) with products (P); a dispensing station (28) configured to take up the packaging containers that have been filled in the filling station (14) in several parallel tracks; an individualizing device (30) for transferring the packaging containers from the dispensing station (28) onto a single track of a conveyor (36); and at least one further processing station (20, 22) arranged on the conveyor (36), wherein the individualizing device (30) is associated with a temporary store (38), and the individualizing device is configured for transferring packaging containers from the dispensing station (28) into the temporary store and transferring packaging containers from the temporary store (38) onto the conveyor (36), wherein at least a part (40) of the temporary store (38) is adapted to be temporarily uncoupled from the production line and to be moved to another storage location, and wherein an inspection station (18) for subjecting the packaging containers to a quality test is provided at or upstream of the individualizing device. and an electronic controller (52) is programmed to carry out the method according to any of the claims 1 to 5.

7. A software product comprising program code stored on a non-transitory machine-readable medium and configured to cause a controller of a production line according to claim 6 to carry out the method according to any of the claims 1 to 5.

## Revendications

1. Procédé d'emballage et de traitement de produits alimentaires ou de produits médicaux dans une ligne de production fonctionnant en continu, dans lequel des contenants d'emballage individuels (B) sont remplis de produits (P) dans une station de remplissage (14), les contenants d'emballage remplis (B) sont délivrés à un dispositif de séparation individuelle (30) dans plusieurs pistes par une station de distribution (28), lequel dispositif de séparation individuelle transfère les contenants d'emballage sur une piste individuelle d'un convoyeur (36), et les contenants d'emballage sont transportés par le convoyeur (36) les uns après les autres jusqu'à au moins une station de traitement supplémentaire (20, 22) sur la ligne de production, dans lequel, selon la situation, le dispositif de séparation individuelle fonctionne dans l'un des trois modes de fonctionnement suivants :
a) un mode de fonctionnement normal, dans lequel les contenants d'emballage (B) sont transférés à partir de la station de distribution (28) sur la piste individuelle du convoyeur (36),
b) un mode de stockage, dans lequel les contenants d'emballage (B) sont transférés à partir de la station de distribution (28) dans une réserve temporaire (38), et
c) un mode de fonctionnement à faible charge, dans lequel les contenants d'emballage (B) sont transférés à partir de la réserve temporaire (38) sur la piste individuelle du convoyeur (36),
dans lequel au moins une partie (40) de la réserve temporaire (38) est temporairement séparée de la ligne de production et déplacée jusqu'à un autre emplacement de stockage,
et dans lequel les contenants d'emballage (B) sont soumis, au plus tard dans le dispositif de séparation individuelle (30), à un contrôle de la qualité et les contenants d'emballage pour lesquels un défaut a été détecté sont triés à l'aide du dispositif de séparation individuelle (30) dans la réserve temporaire (38), les contenants d'emballage étant non pas délivrés au convoyeur (36) mais déposés sur un plateau (46) réservé aux rebuts dans la partie indiquée (40) de la réserve temporaire.

2. Procédé selon la revendication 1, dans lequel au début d'un cycle de production, le mode de stockage est tout d'abord utilisé pendant un certain temps, puis un basculement en mode de fonctionnement normal est effectué lorsqu'un certain stock de contenants d'emballage (B) a été constitué dans la réserve temporaire (38), et un basculement en mode de fonctionnement à faible charge est ensuite effectué en cas d'anomalie de fonctionnement dans la ligne de production en aval de la station de distribution (28).

3. Procédé selon la revendication 1 ou 2, dans lequel un basculement en mode de stockage est effectué en cas d'anomalie de fonctionnement dans la ligne de production en amont du dispositif de séparation individuelle (30) .

4. Procédé selon l'une des revendications précédentes, dans lequel, au moins dans le mode de stockage, un enregistrement (56) est créé dans une base de données pour chaque contenant d'emballage (B) qui atteint la station de distribution (28) et un emplacement de stockage du contenant d'emballage dans la réserve temporaire (38) est enregistré dans cet enregistrement.

5. Procédé selon l'une des revendications précédentes, dans lequel deux lignes de production fonctionnent en parallèle et une réserve temporaire (38') de dispositifs de séparation individuelle (30, 30') des deux lignes de production est utilisée en commun.

6. Ligne de production pour emballer et traiter des produits alimentaires ou des produits médicaux, comportant une station de remplissage (14) pour remplir de produits (P) des contenants d'emballage (B), une station de distribution (28) configurée pour recevoir en parallèle dans plusieurs pistes des contenants d'emballage remplis dans la station de remplissage (16), un dispositif de séparation individuelle (30) pour transférer les contenants d'emballage à partir de la station de distribution (28) sur une piste individuelle d'un convoyeur (36), et au moins une station de traitement supplémentaire (20, 22) agencée sur le convoyeur (36), dans laquelle le dispositif de séparation individuelle (30) est associé à une réserve temporaire (38) et le dispositif de séparation individuelle est configuré pour transférer à partir de la station de distribution (28) des contenants d'emballage dans la réserve temporaire et pour transférer des contenants d'emballage à partir de la réserve temporaire (38) sur le convoyeur (36), dans laquelle au moins une partie (40) de la réserve temporaire (38) peut être temporairement séparée de la ligne de production et peut être amenée jusqu'à un autre lieu de stockage, et dans laquelle sur ou en aval du dispositif de séparation individuelle est agencée une station de contrôle (18) pour un contrôle de la qualité des contenants d'emballage, et un dispositif de commande électronique (52) est programmé pour mettre en œuvre le procédé selon l'une des revendications 1 à 5.

7. Produit logiciel comportant un code de programme stocké sur un support non temporaire lisible par machine et configuré pour permettre à un système informatique de commande d'une ligne de production selon la revendication 6 de mettre en œuvre le procédé selon l'une des revendications 1 à 5.
